# EUROPEAN PATENT APPLICATION

(11) **EP 4 404 301 A1**
(43) Date of publication of application: **24.07.2024**
(21) Application number: 22870011.8
(22) Date of filing: 14.09.2022
(51) Int. Cl.: H01M 4/38, C01B 33/02, C01B 33/26, C01B 33/32, H01M 4/36

(54) **NEGATIVE ELECTRODE ACTIVE MATERIAL FOR SECONDARY BATTERIES, AND SECONDARY BATTERY**

(30) Priority: 17.09.2021 JP 2021152568
(71) Applicant: Panasonic Intellectual Property Management Co., Ltd., Kadoma-shi, Osaka 571-0057 (JP)
(72) Inventor: ASANO, Taisuke, Kadoma-shi, Osaka 571-0057 (JP); KAMIDAIRA, Toshiki, Kadoma-shi, Osaka 571-0057 (JP); SATO, Yosuke, Kadoma-shi, Osaka 571-0057 (JP)
(74) Representative: Novagraaf International SA
(86) International application number: PCT/JP2022/034462
(87) International publication number: WO 2023/042864

(57) **Abstract**

The disclosed negative electrode active material for a secondary battery includes silicate composite particles each including a silicate phase, and silicon particles dispersed in the silicate phase. A peak of an oxygen K-edge energy loss near edge structure (ELNES) at an interface between the silicate phase and the silicon particles is shifted to a lower energy side by 2.0 eV to 3.0 eV relative to a peak of the oxygen K-edge energy loss near edge structure in the silicate phase. With the use of the negative electrode active material according to the present invention, it is possible to achieve a secondary battery having excellent charge-discharge cycle characteristics.

## Description

### [Technical Field]

The present invention relates mainly to an improvement of a negative electrode active material for a secondary battery.

### [Background Art]

Secondary batteries, such as a non-aqueous electrolyte secondary, have a high voltage and a high energy density, and therefore have been recently considered to be promising as the power sources for compact consumer devices, power storage apparatuses, and electric vehicles. With an increasing need for higher energy density for the batteries, materials containing silicon, which can form an alloy with lithium, are expected to be used as negative electrode active materials having a high theoretical capacity density.

However, a silicon-containing material, because of its high irreversible capacity, suffers from a low initial charge-discharge efficiency (in particular, a low ratio of the initial discharge capacity to the initial charge capacity). For this reason, various techniques have been proposed to introduce an amount of lithium corresponding to the irreversible capacity, into the silicon-containing material in advance. Specifically, it has been proposed to use composite particles including a lithium silicate phase, and silicon particles dispersed in the lithium silicate phase (Patent Literature 1). The silicon particles contribute to charge-discharge reaction (reversible lithium absorption and desorption).

### [Citation List]

### [Patent Literature]

Patent Literature 1: Japanese Laid-Open Patent Publication No. 2015-153520

### [Summary of Invention]

### [Technical Problem]

However, the above-described composite particles are known to undergo significant expansion and contraction of the silicon particles associated with absorption and desorption of lithium during charging and discharging. Accordingly, with the expansion and contraction of the silicon particles, a large stress is generated in the lithium silicate phase present around the silicon particles, thus causing cracking and fracture in the composite particles. This reduces the binding force between the composite particles and a binder located in the vicinity thereof, as a result of which the conductive particles, especially, fractured composite particles lose their conductive paths to the surrounding particles and become isolated. In addition, the side reaction between the electrolytic solution and the silicon particles is promoted. This results in a reduction in the charge-discharge cycle characteristics

### [Solution to Problem]

In view of the foregoing, an aspect of the present invention relates to a negative electrode active material for a secondary battery. The negative electrode active material for a secondary battery includes silicate composite particles each including a silicate phase, and silicon particles dispersed in the silicate phase, wherein a peak of an oxygen K-edge energy loss near edge structure (ELNES) at an interface between the silicate phase and the silicon particles is shifted to a lower energy side by 2.0 eV to 3.0 eV relative to a peak of the oxygen K-edge energy loss near edge structure in the silicate phase.

Another aspect of the present invention relates to a secondary battery. The secondary battery includes: a positive electrode; a negative electrode; an electrolyte; and a separator interposed between the positive electrode and the negative electrode, wherein the negative electrode includes a current collector and a negative electrode active material layer, and the negative electrode active material layer includes the above-described negative electrode active material for a secondary battery.

### [Advantageous Effects of Invention]

With the use of the negative electrode active material according to the present invention, it is possible to achieve a secondary battery having excellent charge-discharge cycle characteristics.

While the novel features of the invention are set forth particularly in the appended claims, the invention, both as to organization and content, will be better understood and appreciated, along with other objects and features thereof, from the following detailed description taken in conjunction with the drawings.

### [Brief Description of Drawings]

[FIG. 1] A cross-sectional view schematically showing a negative electrode active material (silicate composite particles) for a secondary battery according to an embodiment of the present invention.
[FIG. 2] A partially cut-away schematic perspective view of a secondary battery according to an embodiment of the present invention.

### [Description of Embodiments]

In the following, embodiments of the present disclosure will be described by way of examples. However, the present disclosure is not limited to the examples described below. Although examples of specific numerical values, materials, and the like may be given in the following description, other numerical values, materials, and the like may be used as long as the effects of the present disclosure can be achieved. Note that constituent elements of known secondary batteries may be used as constituent elements other than those characteristic of the present disclosure. As used herein, in the expression "a range from a numerical value Ato a numerical value B", this range includes the numerical value A and the numerical value B. For example, "Ato B mol%" is synonymous with "Amol% or more and B mol% or less".

A negative electrode active material for a secondary battery according to an embodiment of the present disclosure includes silicate composite particles including a silicate phase, and silicon particles dispersed in the silicate phase.

The silicate composite particles have an island-in-the-sea structure in which the silicon particles serving as island portions are dispersed in the silicate phase serving as a sea portion. An increased capacity can be achieved by controlling the amount of the silicon particles dispersed in the silicate phase. Also, since the silicon particles are dispersed in the silicate phase, the stress associated with the expansion and contraction of the silicon particles during charging and discharging can be relaxed by the silicate phase, which makes it possible to reduce the expansion and contraction of the silicate composite particles. Accordingly, it is possible to reduce cracking and fracture of the silicate composite particles, thus easily achieving both an increased capacity and enhanced cycle characteristics of the battery.

The denser and more stable the interface between the silicate phase and the silicon particles is, the more likely the stress applied by expansion and contraction of the silicon particles is to be relaxed by the silicate phase, and the more likely cracking and fracture of the silicate composite particles are to be suppressed. With the silicate composite particles according to an embodiment of the present disclosure, as a result of increasing the abundance ratio of oxygen at the interface between the silicate phase and the silicon particles, many Si-O-Si bonds are formed between the silicate phase and the silicon particles, thus forming a dense and stable interface between the silicate phase and the silicon particles. This reduces cracking and fracture of the silicate composite particles, whereby the cycle characteristics are further enhanced.

The state of the interface between the silicate phase and the silicon particles can be evaluated by, for example, observing a cross section of a negative electrode active material layer (negative electrode mixture layer) with TEM, identifying the boundary between the silicate phase and the silicon particles based on a cross-sectional image, and performing electron energy loss spectroscopy (EELS) for the position of the boundary. For example, a fine structure near the absorption edge appears in an EELS spectrum associated with excitation of K-shell electrons of an oxygen (O) atom. This fine structure reflects the binding state of the oxygen atom at the interface between the silicate phase and the silicon particles.

With the negative electrode active material for a secondary battery according to an embodiment of the present disclosure, a peak of an oxygen K-edge energy loss near edge structure (ELNES) at the interface between the silicate phase and the silicon particles is shifted to a lower energy side by 2.0 to 3.0 eV relative to a peak of an oxygen K-edge energy loss near edge structure in the silicate phase. In this case, a sufficient amount of Si-O-Si bonds are formed between the silicate phase and the silicon particles, to form a dense and stable interface, thus enhancing the cycle characteristics.

Desirable measurement conditions for oxygen K-edge energy loss near edge structures will be described below.
<TEM-ELNES measurement conditions>
Analyzing apparatus: JEM-F200 manufactured by JEOL
EELS detector: Quantum ER (attached to JEM-F200 manufactured by Gatan)
Condition: acceleration voltage 200 kV
Degree of vacuum: 1 × 10⁻⁶ to 8.0 × 10⁻⁵ Pa
Dispersion: 0.050 eV/ch
Probe diameter: 0.16 nm
Probe current: 0.05 nA
Camera length: 40 mm
Pixel time: about 0.1 (s)

In the measurement, one silicate composite particle is selected from the cross-sectional image. From a cross-sectional image of the selected composite particle, a position at the interface between the silicate phase and the silicon particles, and a position in the silicate phase are selected. At each of the positions, oxygen K-edge ELNES measurement is performed to observe peaks of ELNES in the range from 550 eV to 570 eV, which reflect the coordination environment of O atoms, and a peak position (position at which the intensity is maximum) is determined. The shift amount of the peak position at the interface between the silicate phase and the silicon particles, relative to the peak position in the silicate phase is determined. The peak position in the silicate phase may be determined by averaging measured values at a plurality of locations (e.g., 10 arbitrarily selected locations) in the silicate phase. Similarly, the peak position at the interface between the silicate phase and the silicon particles may be determined by averaging measured values at a plurality of locations (e.g., 10 arbitrarily selected locations) at the interface.

The porosity of the silicate composite particle is preferably less than 6%, and is preferably 3% or less, more preferably 2% or less. In this case, there are fewer gaps between the silicate phase and the silicon particles, and the silicate phase and the silicon particles have a large contact area. Also, Si-O-Si bonds are formed in the contact region between the silicate phase and the silicon particles, thus forming a dense and stable interface. This further enhances the cycle characteristics.

Here, a "porosity" means the proportion of the area occupied by voids relative to the total area of a base particle in a particle cross section, and can be determined by SEM observation of the particle cross section. In the case of using SEM observation, a specific measurement method of the porosity is as follows. It is preferable to form a particle cross section for a particle before the particles is subjected to charging and discharging. However, in the case of using a particle that has been subjected to charging and discharging at least once, a cross section is formed after bringing the particle into a fully discharged state.
(1) A cross section of the base particle is exposed using an ion milling apparatus (e.g., IM4000) manufactured by Hitachi High-Tech Corporation.
(2) The exposed particle cross section is observed with a SEM, to measure the proportion of the void area to the total area of the particle cross section, and the porosity (void area × 100 / total area of particle cross section) is calculated. The porosity is an average value of 10 particles.

Usually, silicate composite particles are produced by mixing a silicate powder and silicon particles, and compounding the mixture through pulverization using a ball mill or the like, followed by sintering the pulverized mixture at a high temperature.

The peak shift amount can be controlled by controlling the conditions of the process of obtaining a lithium silicate powder used for compounding. For example, by controlling the temperature for a solid-phase reaction for obtaining silicate at 850°C or more and a melting point or less, Li₂O reacts more uniformly with SiO₂ and Al₂O₃, so that a bond via O (oxygen) is likely to be formed at the Si interface during the compounding step. That is, the silicate powder is more firmly hardened under the above-described solid-phase reaction condition, and thus the force of pulverizing Si with a ball mill or the like in the compounding step is enhanced. As a result of Si being finely pulverized, and the lithium silicate and the Si metal being more firmly integrated with each other, a bond via O (oxygen) is more likely to be formed at the Si interface.

Increasing the amount of addition of silicon oxide (SiO₂) and adding a specific amount of an aluminum compound according to the production conditions of the silicate powder are important for controlling the above-described peak shift amount at the interface between the silicate phase and the silicon particles. By adding a specific amount of an aluminum compound, the pulverized mixture is less likely to be hardened even when it is sintered at a high temperature, and thus the lithium silicate more easily flows in the sintering step. Consequently, the porosity of the silicate composite particles is reduced, which makes it possible to more easily control the peak shift amount within the range from 2.0 eV to 3.0 eV In the production of the silicate powder, aluminum oxide (Al₂O₃), aluminum hydroxide, and the like may be added as the aluminum compound.

In each of the silicate composite particles, it is preferable that the silicate phase preferably contains silicon oxide (SiO₂) in the range from 69 to 78 mol%, and lithium oxide (Li₂O) in the range from 14 to 25 mol%. Preferably, the silicate phase having such a composition contains aluminum oxide (Al₂O₃) in the range from 2 to 6 mol%. That is, in the silicate phase in a preferred example, the silicon oxide (SiO₂) content is in the range from 69 to 78 mol%, the lithium oxide (Li₂O) content is in the range from 14 to 25 mol%, and the aluminum oxide (Al₂O₃) content is in the range from 2 to 6 mol%. With the above-described content ranges of Li₂O and SiO₂, the reduction of voids through sintering is less likely to proceed when the Al₂O₃ content is less than 2 mol%, or exceeds 6 mol%. As a result, the ELNES peak shift amount is reduced (a sufficient amount of Si-O-Si bonds are not formed between the silicate phase and the silicon particles), and the cycle characteristics are also reduced. Note that in each of the silicate composite particles, the silicate phase contains silicon oxide (SiO₂) in an amount of more preferably 70 mol% or more, and further preferably 73 mol% or more. In each of the silicate composite particles, the silicate phase contains lithium oxide (Li₂O) in an amount of more preferably 21 mol% or less, and further preferably 20 mol% or less. The silicate phase contains aluminum oxide (Al₂O₃) in an amount of more preferably 3 mol% or more, and further preferably 4 mol% or more. The silicon oxide, the lithium oxide, and the aluminum oxide are compounded as silicate, and are not necessarily present alone.

The silicate phase may have a crystal phase of at least one selected from the group consisting of Li₂SiO₃, Li₂Si₂O₅, and SiO₂. The presence or absence of the crystal phase in the composite particle, and the content thereof can be evaluated by X-ray diffractometry (XRD). For example, in a diffraction pattern obtained by X-ray diffractometry (XRD) using Cu-Kα radiation, a peak (peak position) derived from the Si (111) plane of the silicon particles may appear near 2θ = 28° (in the range from 27° to 30°). Note that as used herein, the expression "near 2θ = X°" means a range in which 2θ is from (X-0.5)° to (X+0.5)°, unless otherwise indicated. If the range meant by the expression "near 2θ = X°" is described, the expression is interpreted according to such description.

In a diffraction pattern obtained by X-ray diffractometry (XRD) using Cu-Kα radiation, a peak derived from lithium silicate Li₂SiO₃ may appear near 2θ =19°. In the range from 2θ = 23° to 25° (specifically, near 2θ = 23.7°, near 24.5°, and/or near 24.8°), a peak derived from lithium silicate (Li₂Si₂O₅) may appear. That is, the silicate phase has, in a diffraction pattern obtained by X-ray diffractometry using Cu-Kα radiation, a peak derived from lithium silicate near at least one selected from the group consisting of 2θ = 19.0°, 2Θ = 23.7°, 2Θ = 24.5°, and 2θ = 24.8°.

In a diffraction pattern obtained by X-ray diffractometry (XRD) using Cu-Kα radiation, a peak derived from silicon oxide (SiO₂) may appear near 2θ = 20.4° (in the range from 20° to 21°), near 26.0°, and/or near 49.2°. That is, the silicate phase has, in a diffraction pattern obtained by X-ray diffractometry using Cu-Kα radiation, a peak derived from silicon oxide near at least one selected from the group consisting of 2θ = 20.4°, 2Θ = 26.0°, and 2θ = 49.2°.

The silicate composite particles are produced by pulverizing and compounding silicon and silicate. When the amount of the silicon raw material is excessive relative to the amount of the lithium raw material, silicon oxide may be generated during the production process of the silicate. Silicon oxide may be precipitated in the silicate phase as a fine crystal by a heating step performed after pulverization. The crystal silicon oxide is stable, does not react with lithium ions to play a key role in irreversible reaction during charging, and is less likely to impede expansion and contraction of the silicon particles due to its fineness. The fine crystal of the silicon oxide may be present in a dispersed state in the silicate phase in each of the silicate composite particles. That is, the fine crystal of the silicon oxide and the silicon particles may be each present in a dispersed state in the silicate phase.

In each of the silicate composite particles, the silicate phase includes, for example, an oxide phase represented by the formula: Li_{2z}SiO_{2+z} where 0 < z < 1. In terms of stability, ease of production, and lithium ion conductivity, it is preferable that z = 1/2.

The silicate phase may further include another element M, in addition to Li, Si, and O (oxygen). The inclusion of the element M in the silicate phase enhances the chemical stability and the lithium ion conductivity of the silicate phase, or suppresses a side reaction caused by contact between the silicate phase and a non-aqueous electrolyte. The silicate phase may include at least one element M selected from the group consisting of Na, K, Ca, Mg, Zr, Fe, B, Al, P, and La, for example.

By including an alkali metal element other than Li in the silicate phase, the silicate phase is less likely to be crystallized, has a low viscosity in a softened state, and thus has higher fluidity. Accordingly, in a heat-treating step, gaps between the silicon particles can be easily filled, so that dense composite particles are likely to be generated. As the alkali metal element, Na and/or K is preferable because of the low cost

The silicate phase may include a Group II element such as Ca and Mg. In general, a silicate phase exhibits alkalinity, whereas a Group II element acts to suppress dissolution of an alkali metal from a silicate phase. Thus, the viscosity of the slurry is likely to be stabilized when preparing a slurry including the negative electrode active material. This also eliminates the need for treatment (e.g., acid treatment) for neutralizing the alkali component of the silicate composite particles. In particular, Ca is preferred in that the Vickers hardness of the silicate phase may be improved, thus further enhancing the cycle characteristics.

As another element M other than the alkali metal element and the Group II element, for example, B has a low melting point and is advantageous in enhancing the fluidity. Al, Zr, and La may improve the hardness while retaining the ion conductivity. Rare-earth elements such as La may improve the initial charge-discharge efficiency in charge-discharge cycles. Zr, Ti, P, Al, and B act to increase the endurance to the non-aqueous electrolyte, and the structural stability of the silicate phase.

The silicate phase may further include a trace amount of elements such as Cr, Ni, Mn, Cu, and Mo.

The element M may form a compound. Depending on the type of the element M, the aforementioned compound may be, for example, a silicate of the element M, or an oxide of the element M.

The contents of Li, Si, and the element M in the silicate phase may be measured by, for example, by analyzing a cross section of the negative electrode mixture layer.

First, a battery in a full discharge state is disassembled to take out a negative electrode, and the negative electrode is washed with anhydrous ethyl methyl carbonate or dimethyl carbonate, to remove a non-aqueous electrolyte component. After drying, a cross section of a negative electrode mixture layer is obtained using a cross section polisher (CP). Next, the cross section of the negative electrode mixture layer is observed with a scanning electron microscope (SEM).

Then, the contents of the elements can be determined using any of the following methods. In addition, the composition of the silicate phase is calculated from the contents of the elements.

### <EDX>

From a cross-sectional backscattered electron image of the negative electrode mixture layer, 10 silicate composite particles having a maximum diameter of 5 µm or more are randomly selected, and each of the particles is subjected to elementary mapping analysis using energy-dispersive X-ray (EDX). The area ratio of an element to be analyzed is calculated using image analysis software. The observation magnification is preferably 2000 to 20000X. The measured values of the area ratio of a predetermined element contained in the 10 particles are averaged. From the obtained average value, the content of the element to be analyzed is calculated.

Desirable measurement conditions for SEM-EDX analysis will be described below.

### <SEM-EDX measurement conditions>

Processing apparatus: SM-09010 (Cross Section Polisher) manufactured by JEOL
Processing condition: acceleration voltage 6 kV
Current value: 140 µA
Degree of vacuum: 1 × 10⁻³ to 2 × 10⁻³ Pa
Measurement apparatus: electron microscope SU-70 manufactured by HITACHI
Acceleration voltage during analysis: 10 kV
Field: free mode
Probe current mode: Medium
Probe current range: High
Anode Ap.: 3
OBJAp.: 2
Analysis area: 1 µm square
Analysis software: EDAX Genesis
CPS: 20500
Lsec: 50
Time constant: 3.2

### <AES>

In the measurement, from a cross-sectional backscattered electron image of the negative electrode mixture layer, 10 silicate composite particles having a maximum diameter of 5 µm or more are randomly selected, and each of the particles is subjected to elementary qualitative and quantitative analysis using an Auger electron spectroscopy (AES) analyzer (e.g., J AMP-9510F manufactured by JEOL Ltd.). As the measurement conditions, for example, an acceleration voltage of 10 kV, a beam current of 10 nA, and an an analysis region of 2θ µmφ may be set. The content of a predetermined element is calculated by averaging the amounts of the element contained in the 10 particles.

Note that in the course of charging and discharging, a coating is formed on the surface of each of the silicate composite particles, for example, through decomposition of the electrolyte. As will be described below, each of the silicate composite particles may further include a conductive layer coating the surface of the composite particle. Accordingly, mapping analysis using EDX or AES is performed for a range located 1 µm inward of a peripheral edge of the cross section of the silicate composite particle such that a thin coating and the conductive layer are not included in the measurement range. Through mapping analysis, it is also possible to confirm the state of dispersion of the carbon material inside the composite particle. In the last stage of cycling, the samples become difficult to be distinguished from decomposition products of the electrolyte, and it is therefore preferable to measure the samples before being subjected to cycling or in the initial stage of cycling.

### <ICP>

Each of the samples of the silicate composite particles is fully dissolved in a heated acid solution (acid mixture of hydrofluoric acid, nitric acid, and sulfuric acid), and the carbon in the solution residue is removed by filtration. Thereafter, the resulting filtrate is analyzed by inductively-coupled plasma emission spectrometry (ICP), to determine spectral intensities of the elements. Subsequently, a calibration curve is formed using commercially available standard solutions of elements, and the content of each of the elements in the Si-containing particles is calculated.

The contents of B, Na, K, and Al in the silicate phase can be quantitatively analyzed in accordance with JIS (Japanese Industrial Standard) R3105 (1995) (Methods for chemical analysis of borosilicate glasses).

Although the silicate phase and the silicon particles are present in the silicate composite particles, these can be separately quantitatively determined by using Si-NMR. The Si content obtained by the above-described method is the sum of the amount of Si constituting the silicon particles, and the amount of Si in the silicate phase (and the amount of Si constituting the silicon oxide). Using the results of the quantitative analysis using Si-NMR, the amount of the Si element contained in each of the silicate composite particles is assigned to the silicon particles, the silicon oxide phase, and the silicate phase. Note that as the standard substance required for the quantitative determination, a mixture containing silicon particles, a silicon oxide phase, and a silicate phase with known Si contents in a predetermined ratio may be used.

Desirable measurement conditions for Si-NMR will be described below.

### <Si-NMR measurement conditions>

Measurement apparatus: solid-state nuclear magnetic resonance spectrometer (INOVA-400) manufactured by Varian Inc.
Probe: Varian 7 mm CPMAS-2
MAS: 4.2 kHz
MAS rate: 4 kHz
Pulse: DD (45° pulse + signal acquisition time 1H decoupling)
Repetition time: 1200 sec to 3000 sec
Observation width: 100 kHz
Center of observation: approximately -100 ppm
Signal acquisition time: 0.05 sec
Number of times of integrations: 560
Sample amount: 207.6 mg

To achieve an increased capacity and enhanced cycle characteristics, the content of the silicon particles in each of the silicate composite particles may be, for example, 30 mass% or more and 80 mass% or less. By setting the content of the silicon particles to 30 mass% or more, the proportion of the silicate phase is reduced, and thus the initial charge-discharge efficiency is likely to be improved. By setting the content of the silicon particles to 80 mass% or less, the degree of expansion and contraction of the silicate composite particles during charging and discharging can be more easily reduced. The content of the silicon particles in each of the silicate composite particles is preferably 40 mass% or more, and more preferably 50 mass% or more.

The silicon particles dispersed in the silicate phase have a particulate phase of a simple substance of silicon (Si), and is constituted by a single crystallite or a plurality of crystallites. The crystallite size of the silicon particles is preferably 50 nm or less. When the crystallite size of the silicon particles is 50 nm or less, the amount of volume change caused by expansion and contraction of the silicon particles associated with charging and discharging can be reduced, so that the cycle characteristics can be further enhanced. For example, isolation of silicon particles, which may result from reduced contact points between the silicon particles and the surroundings due to voids formed around the silicon particles during contraction of the silicon particles, can be suppressed, and a reduction in charge-discharge efficiency due to such isolation of the particles can be suppressed. The lower limit of the crystallite size of the silicon particles is not particularly limited, and is, for example, 2 nm.

The crystallite size of the silicon particles is more preferably 5 nm or more, 30 nm or less, and further preferably 5 nm or more and 20 nm or less. When the crystallite size of the silicon particles is 20 nm or less, the expansion and contraction of the silicon particles can be made uniform, and the cycle characteristics can be enhanced by reducing microcracks of particles generated by expansion and contraction of the silicon particles during charging and discharging. The crystallite size of the silicon particles is calculated from the half-width of a diffraction peak attributed to the Si (111) plane in an X-ray diffraction (XRD) pattern of the silicon particles, using the Scherrer equation.

At least part of the surface of each of the silicate composite particles may be coated with a conductive material. Due to the poor electron conductivity of the silicate phase, the conductivity of the silicate composite particle also tends to be low However, the conductivity of the silicate composite particle can be dramatically increased by coating the surface of the base particle with a conductive material, to form a conductive layer. As the conductive material, a carbon material is preferred. The carbon material preferably includes at least one selected from the group consisting of carbon compounds and carbonaceous materials.

Preferably, the conductive layer has a thickness small enough not to substantially affect the average particle diameter of the silicate composite particle. In consideration of the securing of conductivity and the lithium ion diffusion, the thickness of the conductive layer is preferably 1 to 200 nm, and more preferably 5 to 100 nm. The thickness of the conductive layer can be measured by observing a cross section of a silicate composite particle using a SEM or a TEM (transmission electron microscope).

Examples of the carbon compound include compounds including carbon and hydrogen, and compounds including carbon, hydrogen, and oxygen. As the carbonaceous material, amorphous carbon with low crystallinity, graphite with high crystallinity, and the like can be used.. Examples of the amorphous carbon include carbon black, coal, coke, charcoal, and activated carbon. Examples of the graphite include natural graphite, artificial graphite, and graphitized mesophase carbon particles. Among these, amorphous carbon is preferred because of its low hardness and high buffer action for silicon particles that undergo volume change during charging and discharging. The amorphous carbon may be graphitizable carbon (soft carbon), or non-graphitizable carbon (hard carbon). Examples of the carbon black include acetylene black and Ketjen black.

The silicate composite particles can be taken out from a battery by the following method. First, the battery is disassembled to take out a negative electrode, and the negative electrode is washed with anhydrous ethyl methyl carbonate or dimethyl carbonate, to remove an electrolytic solution. Next, a negative electrode mixture is stripped off from copper foil, and the negative electrode mixture is pulverized in a mortar, to obtain a sample powder. Next, the sample power is dried in a dry atmosphere for one hour, and then immersed in lightly boiled 6M hydrochloric acid for 10 minutes, to remove any alkali metal, such as Na and Li, which may be contained in a binder and the like. Next, the sample powder is washed with ion exchanged water, filtered, and dried for one hour at 200°C. Thereafter, in an oxygen atmosphere, the sample powder was heated to 900°C to remove the carbon component, whereby silicate composite particles alone can be isolated.

Next, an example of a production method of the silicate composite particles will be described in detail.

### Process (i) (process of obtaining lithium silicate)

As a raw material of lithium silicate, a raw material mixture including a Si-containing raw material and a Li raw material in a predetermined ratio is used. The above-described element M may be included in the raw material mixture. Preferably, an Al raw material (e.g., any of the previously described aluminum compounds) is included in the raw material compound as a raw material including the element M. A mixture obtained by mixing predetermined amounts of the aforementioned raw materials is dissolved, and the resulting melt is passed between metal rolls so as to be formed into flakes, to produce lithium silicate. Thereafter, the silicate in the form of flakes is crystalized by being heat-treated in an atmospheric air at a temperature greater than or equal to a glass transition point, and less than or equal to a melting point temperature. Note that the silicate in the form of flakes can also be used without being crystalized. The mixture of predetermined amounts of the raw materials can be fired at, for example, a temperature of 850°C or more and less than or equal to a melting point, without dissolving the mixture, to produce the silicate by a solid-phase reaction.

Silicon oxide can be used as the Si raw material. For example, lithium carbonate, lithium oxide, lithium hydroxide, lithium hydride, and the like can be used as the Li raw material. These may be used alone or in combination of two or more thereof. Examples of the raw material of the element M include oxides, hydroxides, carbonic acid compounds, hydrides, nitrates, sulfates, and the like of the elements.

The Si raw material that has not reacted with the Li raw material may remain in the lithium silicate. The remaining Si raw material is dispersed in the lithium silicate as fine crystals of silicon oxide.

### Process (ii) (process of obtaining silicate composite particles)

Next, compounding is performed by blending a silicon raw material with the lithium silicate. For example, composite particles are produced through the following steps (a) to (c).

### Step (a)

First, a silicon raw material powder and a lithium silicate powder are mixed in a mass ratio of 20:80 to 95:5. For the silicon raw material, silicon coarse particles having an average particle diameter of several to several tens of micrometers may be used.

### Step (b)

Next, using a pulverizing apparatus such as a ball mill, the mixture of the silicon raw material and the lithium silicate is pulverized and compounded, while micronizing the mixture. At this time, wet pulverization may be performed by adding an organic solvent to the mixture. A predetermined amount of the organic solvent may be charged into a pulverization container at a time in the initial stage of the pulverization. Alternatively, a predetermined amount of the organic solvent may be intermittently charged into a pulverization container multiple times in the course of the pulverization. The organic solvent serves to prevent an obj ect to be pulverized from adhering to the inner wall of the pulverization container.

As the organic solvent, it is possible to use alcohols, ethers, fatty acids, alkanes, cycloalkanes, silicates, metal alkoxides, and the like.

For the silicon raw material, silicon coarse particles having an average particle diameter of several to several tens of micrometers may be used. Preferably, the crystallite size of the resulting final silicon particles is controlled such that the crystallite size calculated from the half-width of a diffraction peak attributed to the Si (111) plane in an X-ray diffraction pattern using the Scherrer equation is 5 nm or more and 50 nm or less.

Note that the silicon raw material and the lithium silicate may be mixed after being separately micronized. Also, silicon nanoparticles and amorphous lithium silicate nanoparticles may be produced without using a pulverizing apparatus, and these nanoparticles may be mixed. For the production of the nanoparticles, a known method such as a gas phase method (e.g., plasma method) and a liquid phase method (e.g., liquid phase reduction method) may be used.

### Step (c)

Next, the pulverized material is fired while applying a pressure thereto by hot pressing or the like, to obtain a sintered body. Firing is performed, for example, in an inert atmosphere (e.g., an atmosphere such as argon, nitrogen, etc.). The firing temperature is preferably 450°C or more and 1000°C or less. When the firing temperature is in the aforementioned range, fine silicon particles can be easily dispersed in a silicate phase having low crystallinity. During sintering, the lithium silicate is softened, and flows so as to fill the gaps between the silicon particles. As a result, a dense block-shaped sintered body containing the silicate phase as a sea portion, and the silicon particles as island portions can be obtained. The firing temperature is preferably 550°C or more and 900°C or less, and more preferably 650°C or more and 850°C or less. The firing time is, for example, 1 hour or more and 10 hours or less.

Pulverizing the obtained sintered body provides silicate composite particles. By appropriately selecting the pulverizing conditions, silicate composite particles having a predetermined average particle diameter can be obtained.

### Process (iii) (process of forming conductive layer on surface of each silicate composite particle)

Next, at least part of the surface of each of the silicate composite particles may be coated with a conductive material, to form a conductive layer. The conductive material is preferably electrochemically stable, and a conductive carbon material is preferred. As the conductive carbon material, for example, coal pitch or coal tar pitch, petroleum pitch, phenol resin, and the like may be used. A conductive layer covering at least part of the surface of each of the composite particles is formed by mixing the raw material of the conductive material with the composite particles, and firing the mixture to carbonize the raw material of the conductive material.

Firing of the mixture of the raw material of the conductive material and the composite particles is performed, for example, in an inert atmosphere (e.g., an atmosphere such as argon, nitrogen, etc.). The firing temperature is preferably 450°C or more and 1000°C or less. When the firing temperature is in the aforementioned range, a conductive layer having high conductivity can be easily formed in the silicate phase having low crystallinity. The firing temperature is preferably 550°C or more and 900°C or less, and more preferably 650°C or more and 850°C or less. The firing time is, for example, 1 hour or more and 10 hours or less.

The conductive layer may be formed on each of the composite particles using other methods. For example, the conductive layer may be formed by allowing hydrocarbon gas to react on the surfaces of the Si-containing particles by a gas phase method such as a CVD method. Acetylene, methane, and the like may be used as the hydrocarbon gas. Also, the conductive layer may be formed by mixing carbon black with the composite particles, and allowing a precursor of the conductive layer to adhere to the surface of each of the composite particles, followed by firing the precursor together with the composite particles.

### Process (iv)

A process of washing the composite particles (including those having conductive layers on the surfaces thereof) with acid may be performed. For example, by washing the composite particles with an acidic aqueous solution, it is possible to remove a trace amount of an alkali component, which may be produced when compounding the silicon raw material and the lithium silicate, present on the surfaces of the composite particles. As the acidic aqueous solution, it is possible to use an aqueous solution of an inorganic acid such as hydrochloric acid, hydrofluoric acid, sulfuric acid, nitric acid, phosphoric acid, and carbonic acid, or an aqueous solution of an organic acid such as citric acid and acetic acid.

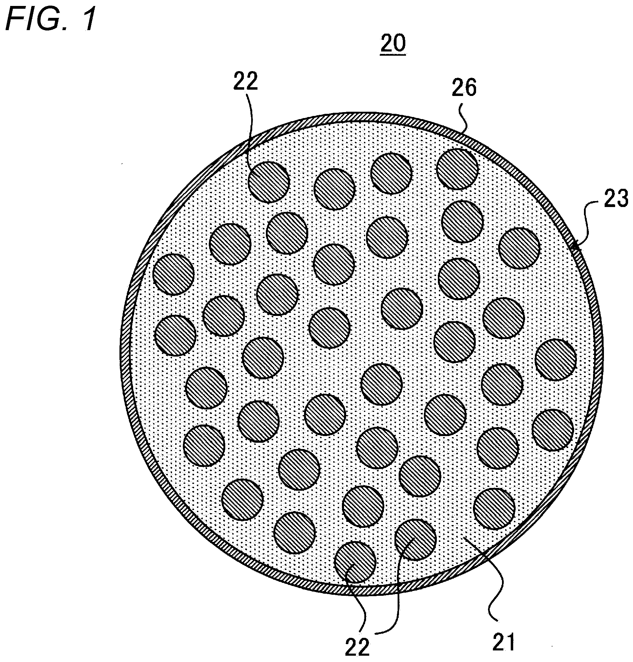

FIG. 1 schematically shows a cross section of a silicate composite particle 20 as an example of the negative electrode material.

Abase particle 23 includes a lithium silicate phase 21, and silicon particles 22 dispersed in the silicate phase 21. The base particle 23 has an island-in-the-sea structure in which fine silicon particles are dispersed in a matrix of the lithium silicate phase 21. The surface of the base particle 23 is coated with a conductive layer 26, to form a silicate composite particle 20.

The base particle 23 may include another component in addition to the lithium silicate phase 21, the silicon particles 22, a silicon oxide phase, and a carbon material.

The average particle diameter of the silicon particles 22, before initial charging, is 500 nm or less, preferably 200 nm or less, and more preferably 50 nm or less. By appropriately refining the silicon particles 22 in this manner, the volume change during charging and discharging is reduced, which enhances the structural stability. Also, the cycle characteristics are enhanced as a result of expansion and contraction of the silicon particles being made uniform, and cracking of the particles being suppressed. The average particle diameter of the silicon particles 22 is measured by observing a cross section of the negative electrode material using a SEM or a TEM. Specifically, the average particle diameter is determined by averaging the maximum diameters of arbitrarily selected 100 silicon particles 22.

A secondary battery according to an embodiment of the present invention includes a positive electrode, a negative electrode, an electrolyte, and a separator interposed between the positive electrode and the negative electrode. The negative electrode includes a current collector, and a negative electrode active material layer including the above-described negative electrode active material for a secondary battery. In the following, examples of the negative electrode, the positive electrode, the electrolyte, and the separator included in the secondary battery according to an embodiment of the present invention will be described.

### [Negative electrode]

The negative electrode includes, for example, a negative electrode current collector, and a negative electrode mixture layer formed on the surface of the negative electrode current collector and including a negative electrode active material. The negative electrode mixture layer can be formed by applying, to the surface of the negative electrode current collector, a negative electrode slurry in which the negative electrode mixture is dispersed in a dispersing medium, and drying the slurry. The coated film obtained after drying may be rolled, as necessary. The negative electrode mixture layer may be formed on one side of the negative electrode current collector, or may be formed on both sides thereof.

The negative electrode mixture contains, as the negative electrode active material, a negative electrode active material for a secondary battery containing the above-described silicate composite particles as an essential component, and may contain a binder, a conductive agent, a thickener, and the like as optional components. The silicon particles contained in the silicate composite particles can absorb a large amount of lithium ions, and thus contribute to an increased capacity of the negative electrode.

The negative electrode active material may further include another active material ingredient that electrochemically absorbs and desorb lithium ions. For example, a carbon-based active material is preferred as another active material ingredient. The silicate composite particles undergo volume expansion and contraction associated with charging and discharging, and, therefore, when the ratio thereof in the negative electrode active material increases, a contact failure between the negative electrode active material and the negative electrode current collector is likely to occur due to charging and discharging. On the other hand, by using the silicate composite particles and the carbon-based active material in combination, it is possible to achieve excellent cycle characteristics, while providing the negative electrode with the high capacity of the silicon particles. The proportion of the silicate composite particles relative to the total amount of the silicate composite particles and the carbon-based active material is, for example, preferably 0.5 to 15 mass%, and more preferably 1 to 5 mass%. This makes it possible to more easily achieve both an increased capacity and enhanced improved cycle characteristics.

Examples of the carbon-based active material include graphite, graphitizable carbon (soft carbon), and non-graphitizable carbon (hard carbon). Among these, graphite is preferred because of exhibiting excellent stability during charging and discharging and also having a small irreversible capacity. Graphite means a material having a graphite crystal structure, and includes, for example, natural graphite, artificial graphite, and graphitized mesophase carbon particles. The carbon-based active materials may be used alone or in combination of two or more thereof.

A non-porous conductive substrate (metal foil, etc.) or a porous conductive substrate (a mesh structure, a net structure, a punched sheet, etc.) is used as the negative electrode current collector. Examples of the material of the negative electrode current collector include stainless steel, nickel, a nickel alloy, copper, and a copper alloy. The thickness of the negative electrode current collector is, but is not particularly limited to, preferably 1 to 50 µm, and more preferably 5 to 20 µm, from the viewpoint of the balance between the strength and the weight reduction of the negative electrode.

Examples of the binder include fluorocarbon resins, polyolefin resins, polyamide resins, polyimide resins, vinyl resins, styrene-butadiene copolymer rubber (SBR), polyacrylic acids, and derivatives thereof. These may be used alone or in combination of two or more thereof. Examples of the conductive agent include carbon black, conductive fibers, carbon fluoride, and organic conductive materials. These may be used alone or in combination of two or more thereof. Examples of the thickener include carboxymethyl cellulose (CMC) and polyvinyl alcohol. These may be used alone or in combination of two or more thereof.

Examples of the dispersing medium include water, alcohols, ethers, N-methyl-2-pyrrolidone (NMP), and solvent mixtures thereof.

### [Positive electrode]

The positive electrode includes, for example, a positive electrode current collector, and a positive electrode mixture layer formed on the surface of the positive electrode current collector. The positive electrode mixture layer can be formed by applying, to the surface of the positive electrode current collector, a positive electrode slurry in which the positive electrode mixture is dispersed in a dispersing medium, and drying the slurry. The coated film obtained after drying may be rolled, as necessary. The positive electrode mixture layer may be formed on one side of the positive electrode current collector, or may be formed on both sides thereof.

The positive electrode mixture includes a positive electrode active material as an essential component, and may include a binder, a conductive agent, and the like as optional components.

A lithium composite metal oxide can be used as the positive electrode active material. Examples of the lithium composite metal oxide include LiₐCoO₂, LiₐNiO₂, LiₐMnO₂, LiₐCo_{b}Ni_{1-b}O₂, LiₐCo_{b}M_{1-b}O_{c}, LiₐNi_{1-b}M_{b}O_{c}, LiₐMn₂O₄, LiₐMn_{2-b}M_{b}O₄, LiMePO₄, and Li₂MePO₄F. Here, M is at least one selected from the group consisting of Na, Mg, Sc, Y, Mn, Fe, Co, Ni, Cu, Zn, Al, Cr, Pb, Sb, and B. Me includes at least a transition element (e.g., at least one selected from the group consisting of Mn, Fe, Co, and Ni). Here, 0 ≤ a ≤ 1.2, 0 ≤ b ≤ 0.9, and 2.0 ≤ c ≤ 2.3. Note that the value a, which represents the molar ratio of lithium, is a value obtained immediately after the production of the active material, and increases or decreases through charge-discharge.

As the binder and the conductive agent, those given as examples for the negative electrode can be used. As the conductive agent, graphite such as natural graphite or artificial graphite may also be used.

The shape and the thickness of the positive electrode current collector can be respectively selected from the shapes and the ranges corresponding to the negative electrode current collector. Examples of the material of the positive electrode current collector include stainless steel, aluminum, an aluminum alloy, and titanium.

### [Electrolyte]

The electrolyte contains a solvent, and a lithium salt dissolved in the solvent. The concentration of the lithium salt in the electrolyte is, for example, 0.5 to 2 mol/L. The electrolyte may contain a known additive.

An aqueous solvent or a non-aqueous solvent is used as the solvent. For example, a cyclic carbonic acid ester, a chain carbonic acid ester, a cyclic carboxylic acid ester, and the like can be used as the non-aqueous solvent. Examples of the cyclic carbonic acid ester include propylene carbonate (PC) and ethylene carbonate (EC). Examples of the chain carbonic acid ester include diethyl carbonate (DEC), ethyl methyl carbonate (EMC), and dimethyl carbonate (DMC). Examples of the cyclic carboxylic acid ester include γ-butyrolactone (GBL) and γ-valerolactone (GVL). The non-aqueous solvents may be used alone or in combination of two or more thereof.

As the lithium salt, it is possible to use, for example, lithium salts of chlorine-containing acid (LiClO₄, LiAlCl₄, LiB₁₀Cl₁₀, etc.), lithium salts of fluorine-containing acid (LiPF₆, LiBF₄, LiSbF₆, LiAsF₆, LiCF₃SO₃, LiCF₃CO₂, etc.), lithium salts of fluorine-containing acid imide (LiN(CF₃SO₂)₂, LiN(CF₃SO₂)(C₄F₉SO₂), LiN(C₂F₅SO₂)₂, etc.), lithium halides (LiCl, LiBr, LiI, etc.), and the like. The lithium salts may be used alone or in combination of two or more thereof.

### [Separator]

Usually, it is desirable that a separator be interposed between the positive electrode and the negative electrode. The separator has a high ion permeability, as well as appropriate mechanical strength and insulating properties. As the separator, it is possible to use a microporous thin film, a woven fabric, a non-woven fabric, and the like. For example, polyolefins such as polypropylene and polyethylene may be used as the material of the separator.

Examples of the structure of the secondary battery include a structure in which an electrode group formed by winding a positive electrode and a negative electrode with a separator interposed therebetween, and a non-aqueous electrolyte are housed in an outer member. Alternatively, an electrode group having another configuration, such as a stacked electrode group formed by stacking a positive electrode and a negative electrode with a separator interposed therebetween, may be used in place of the wound electrode group. The secondary battery may have any configuration, including, for example, a cylindrical configuration, a prismatic configuration, a coin configuration, a button configuration, and a laminated configuration.

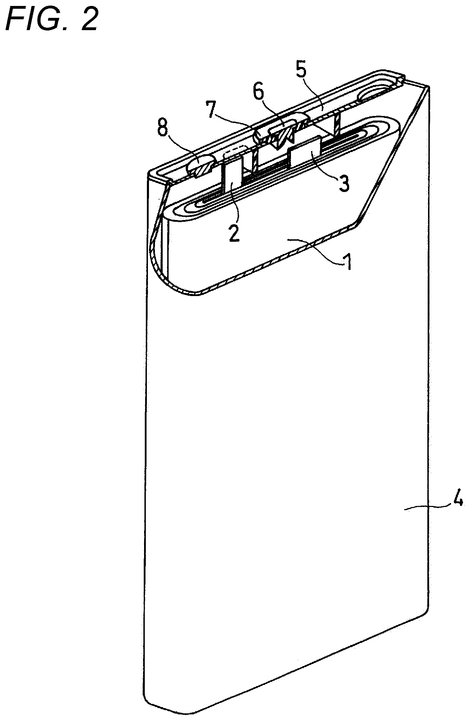

FIG. 2 is a partially cut-away schematic perspective view of a prismatic secondary battery according to an embodiment of the present invention.

The battery includes a bottomed prismatic battery case 4, an electrode group 1 and an electrolyte (not shown) that are housed in the battery case 4, and a sealing plate 5 that seals the opening of the battery case 4. The electrode group 1 includes a long strip-shaped negative electrode, a long strip-shaped positive electrode, and a separator interposed therebetween. The electrode group 1 is formed by winding the negative electrode, the positive electrode, and the separator around a flat plate-shaped winding core, and pulling out the winding core. The sealing plate 5 has a liquid injection port closed by a sealing plug 8, and a negative electrode terminal 6 insulated from the sealing plate 5 by a gasket 7.

An end of a negative electrode lead 3 is attached to a negative electrode current collector of the negative electrode through welding or the like. An end of a positive electrode lead 2 is attached to a positive electrode current collector of the positive electrode through welding or the like. The other end of the negative electrode lead 3 is electrically connected to the negative electrode terminal 6. The other end of the positive electrode lead 2 is electrically connected to the sealing plate 5. A resin frame body that separates the electrode group 1 and the sealing plate 5 from each other and also separates the negative electrode lead 3 and the battery case 4 from each other is disposed at an upper portion of the electrode group 1.

### [Examples]

Hereinafter, the present invention will be specifically described by way of examples and comparative examples. However, the present invention is not limited to the following examples.

### <Examples 1 to 5, Comparative Examples 1 to 3>

### [Preparation of silicate composite particles]

Lithium carbonate (Li₂CO₃) as a Li raw material, silicon dioxide (SiO₂) as a Si raw material, and a compound of the element M were mixed in each of the molar ratios shown in Table 1, and the mixture was fired in an inert gas atmosphere at 800°C for 10 hours, to obtain lithium silicate. The obtained lithium silicate was pulverized so as to have an average particle diameter of 10 µm. In Table 1, each of the molar ratios of lithium and the element M represents a molar ratio in terms of an oxide (excluding Fe).

The lithium silicate having an average particle diameter of 10 µm and the silicon raw material (3N, average particle diameter 10 µm) were mixed in a mass ratio of 40:60.

The mixture was charged into a pot (made of SUS, volume: 500 mL) of a planetary ball mill (P-5 manufactured by Fritsch Co., Ltd.). Then, 24 SUS balls (diameter 20 mm) were placed in the pot, and with the lid closed, the mixture was pulverized in an inert atmosphere at 200 rpm for 25 hours.

Next, the mixture in the form of powder was taken out in the inert atmosphere, and fired at 600°C for 4 hours, with pressure applied thereto using a hot pressing machine in the inert atmosphere, thus obtaining a sintered body of the mixture. The obtained sintered body was pulverized, and passed through a 40 µm mesh, to obtain silicate composite particles.

After mixing 100 parts by mass of the silicate composite particles and 5 parts by mass of coal tar pitch, the mixture was fired in an argon atmosphere at 800°C, to form a conductive layer covering at least part of the surfaces of the composite particles. Through firing, the coal tar pitch was converted into amorphous carbon. The conductive layer had a thickness of 10 nm. The mass proportion of the conductive layer to the total mass of the Si-containing particles and the conductive layer was 3 mass%. Thereafter, using a sieve, silicate composite particles having an average particle diameter of 5 µm and including the conductive layer were obtained. The silicate composite particles were subjected to XRD analysis, to confirm peaks derived from Si, SiO₂, Li₂Si₂O₅, and Li₂SiO₃.

### [Production of negative electrode]

The silicate composite particles and graphite were mixed in a mass ratio of 5:95, and the mixture was used as a negative electrode active material. Water was added to a negative electrode mixture containing the negative electrode active material, carboxymethyl cellulose sodium (CMC-Na), and styrene-butadiene rubber (SBR) in a mass ratio of 97.5:1:1.5, and the mixture was stirred, to prepare a negative electrode slurry. Next, the negative electrode slurry was applied onto copper foil such that the mass of the negative electrode material mixture per 1 m² of the copper foil was 190 g, and the coated film was dried, followed by rolling, to produce a negative electrode with a negative electrode mixture layer having a density of 1.5 g/cm³ formed on both sides of the copper foil.

### [Production of positive electrode]

N-methyl-2-pyrrolidone (NMP) was added to a positive electrode mixture containing LiNi_{0.88}Co_{0.09}Al_{0.03}O₂, acetylene black, and polyvinylidene fluoride (PVDF) in a mass ratio of 95:2.5:2.5, and the mixture was stirred, to prepare a positive electrode slurry. Next, the positive electrode slurry was applied onto aluminum foil, and the coated film was dried, followed by rolling, to produce a positive electrode with a positive electrode mixture layer having a density of 3.6 g/cm³ formed on both sides of the aluminum foil.

### [Preparation of electrolytic solution]

In a solvent mixture containing ethylene carbonate (EC) and diethyl carbonate (DEC) in a volume ratio of 3:7, LiPF₆ was dissolved at a concentration of 1.0 mol/L, to prepare a non-aqueous electrolytic solution.

### [Production of secondary battery]

The positive electrode and the negative electrode, with a tab was attached to each of the electrodes, were spirally wound with a separator interposed therebetween such that the tabs were located at the outermost periphery, to produce an electrode group. The electrode group was inserted into an outer member made of an aluminum laminate film, and vacuum dried at 105°C for 2 hours. Thereafter, a non-aqueous electrolytic solution was injected into the outer member, and the opening of the outer member was sealed, to obtain a secondary battery.

In preparation of the silicate composite particles, the mixing ratio of the Li raw material, the Si raw material, and the oxide of the element M was changed when obtaining the lithium silicate through firing, to obtain lithium silicates having different compositions. Using each of the lithium silicates, secondary batteries A1 to A5, and B1 to B3, in which silicate composite particles containing silicate phases with different compositions were used for the negative electrode active materials, were produced. Table 1 shows the compositions of the silicate phases of the secondary batteries A1 to A5, and B1 to B3 represented as mixing ratios (molar ratios) of the Li raw material, the Si raw material, and the compound of the element M. In Table 1, A1 to A5 correspond to Examples 1 to 5, and B1 to B3 correspond to Comparative Examples 1 to 3.

The secondary batteries A1 to A5, and B1 to B3 were evaluated as follows.

### (1) Measurement of peak shift in oxygen K-edge ELNES

Using the previously described method, oxygen K-edge ELNES measurement was performed for a cross section of each of the negative electrode mixture layers. In an image of the cross section, one position at the interface between the silicate phase and the silicon particles, and one position in the silicate phase were selected, and a peak shift amount was determined from the ELNES peak at the interface between the silicate phase and the silicon particles, and the ELNES peak in the silicate phase.

### (2) Measurement of porosity of silicate composite particles

Using the previously described method, the porosity (%) of the silicate composite particles was determined.

### (3) Charge-discharge cycle test

For each of the batteries, charging and discharging were repeatedly performed under the following conditions.

### <Charging>

At 25°C, constant-current charging was performed at a current of 1 It (800 mA) until the voltage reached 4.2 V, followed by constant-voltage charging at a constant voltage of 4.2 V until the current reached 1/20 lt (40 mA).

### <Discharging>

At 25°C, constant-current discharging was performed at a current of 1 It (800 mA) until the voltage reached 2.75 V.

The rest period between charging and discharging was 10 minutes. A discharge capacity C₁ at the 1 st cycle was determined for each of the batteries. In addition, a discharge capacity C₃₀₀ at the 300th cycle was determined for each of the batteries, and the rate represented by 100 × C₃₀₀/C₁ (%) was determined as a capacity retention rate R. The larger the value of R, the better the charge-discharge cycle characteristics are.

**[Table 1]**

| Battery | Peak shift amount [eV] | Capacity retention rate R | Porosity [%] | Lithium silicate: composition during synthesis [mol%] | | | | | | | | | | | | |
|---|---|---|---|---|---|---|---|---|---|---|---|---|---|---|---|---|
| | | | | SiO₂ | Li₂O | Na₂O₅ | K₂O | CaO | MgO | Al₂O₃ | B₂O₃ | P₂O₅ | La₂O₃ | Fe | ZrO₂ | total |
| B1 | 1.4 | 90 | 8 | 60 | 31 | 2 | 1 | 0 | 1 | 0 | 1 | 2 | 0 | 1.4 | 0.6 | 100 |
| B2 | 1.7 | 95 | 6 | 69 | 22 | 1 | 1 | 0 | 0 | 0 | 2 | 1 | 1 | 2 | 1 | 100 |
| A1 | 2.0 | 100 | 3 | 69 | 25 | 0 | 0 | 0 | 0 | 2 | 0 | 1 | 0 | 2 | 1 | 100 |
| A2 | 2.2 | 105 | 1.5 | 70 | 21 | 0 | 0 | 0 | 1 | 3 | 1.5 | 0 | 1 | 1.6 | 0.9 | 100 |
| A3 | 2.5 | 110 | 1 | 73 | 16 | 1 | 1 | 0 | 0 | 4.2 | 0 | 0 | 1.9 | 2 | 0.9 | 100 |
| A4 | 2.8 | 115 | 0.5 | 75 | 17 | 0 | 0 | 1 | 0 | 5 | 0 | 0 | 0 | 1 | 1 | 100 |
| A5 | 3.0 | 118 | 1.5 | 78 | 14 | 0 | 0 | 0 | 0 | 6 | 0 | 0 | 1 | 0.5 | 0.5 | 100 |
| B3 | 1.9 | - | 11 | 81 | 10 | 0 | 0 | 0 | 0 | 9 | 0 | 0 | 0 | 0 | 0 | 100 |

The evaluation results for the secondary batteries A1 to A5, and B1 to B3 are shown in Table 1. Table 1 shows the evaluation results of the porosity, the peak shift, and the capacity retention rate R of the silicate composite particles used as the negative electrode active material of each of the batteries. In Table 1, the capacity retention rates R are shown as relative values, with the capacity retention rate of the battery A1 taken as 100. In Table 1, the composition of the silicate phase of the silicate composite particles used as the negative electrode active material of each of the batteries is also shown as a mixing ratio (molar ratio) of the Li raw material, the Si raw material, and the compound of the element M used for synthesis.

The peak shift amounts in Table 1 each show how much the ELNES peak at the interface between the silicate phase and the silicon particles is shifted to the lower energy side relative to the ELNES peak in the silicate phase. Table 1 indicates that the secondary batteries A1 to A6, which had a peak shift amount in the range from 2.0 eV to 3.0 eV, achieved a capacity retention rate R higher than those achieved by the batteries B1 to B3.

The battery A1 of Example 1 had about the same amount of addition of SiO₂ as that of the battery B2, but, due to addition of Al₂O₃, had a lower porosity and an improved capacity retention rate R. In addition, the peak shift amount was successfully controlled within the range from 2.0 eV to 3.0 eV

The results for the batteries A1 to A5, and B1 and B2 show that the capacity retention rate R tends to increase with an increase in the amount of addition of Si02. It is also shown that the peak shift amount tends to increase with an increase in the amount of addition of Si02. However, the battery B3, which had a larger amount of addition of SiO₂ than that of the battery A6, had significantly reduced cycle characteristics, so that it was not possible to repeat charge-discharge cycles until the 300th cycle. The peak shift amount was also reduced to less than 2.0 eV This is presumably because an excessive amount of addition of SiO₂ resulted in formation of lithium silicate having a high porosity and differing from Li₂SiO₃ and Li₂Si₂O₅. The batteries A1 to A5, which had an amount of addition of SiO₂ in the range from 69 mol% to 78 mol% and an amount of addition of Li₂O in the range from 14 mol% to 25 mol%, had a peak shift amount in the range from 2.0 eV to 3.0 eV, in which case the porosity was significantly reduced, and the capacity retention rate was noticeably improved.

### [Industrial Applicability]

The present invention can provide a non-aqueous electrolyte secondary battery having a high capacity and favorable charge-discharge cycle characteristics. The non-aqueous electrolyte secondary battery according to the present invention is useful as a main power source for mobile communication devices, mobile electronic device, and the like.

Although the present invention has been described in terms of the presently preferred embodiments, it is to be understood that such disclosure is not to be interpreted as limiting. Various alterations and modifications will no doubt become apparent to those skilled in the art to which the present invention pertains, after having read the above disclosure. Accordingly, it is intended that the appended claims be interpreted as covering all alterations and modifications as fall within the true spirit and scope of the invention.

### [Reference Signs List]

1: electrode group, 2: positive electrode lead, 3: negative electrode lead, 4: battery case, 5: sealing plate, 6: negative electrode terminal, 7: gasket, 8: sealing plug, 20: silicate composite particle, 21: lithium silicate phase, 22: silicon particle, 23: base particle, 26: conductive layer

## Claims

1. A negative electrode active material for a secondary battery, comprising
silicate composite particles each including a silicate phase, and silicon particles dispersed in the silicate phase,
wherein a peak of an oxygen K-edge energy loss near edge structure at an interface between the silicate phase and the silicon particles is shifted to a lower energy side by 2.0 eV to 3.0 eV relative to a peak of the oxygen K-edge energy loss near edge structure in the silicate phase.

2. The negative electrode active material for a secondary battery according to claim 1, wherein the silicate composite particles have a porosity of less than 6%.

3. The negative electrode active material for a secondary battery according to claim 1 or 2, wherein in each of the silicate composite particles, the silicate phase contains silicon oxide (SiO₂) in a range from 69 to 78 mol%, lithium oxide (Li₂O) in a range from 14 to 25 mol%, and aluminum oxide (Al₂O₃) in a range from 2 to 6 mol%.

4. The negative electrode active material for a secondary battery according to any one of claims 1 to 3, wherein the silicate phase has a crystal phase of at least one selected from the group consisting of Li₂SiO₃, Li₂Si₂O₅, and SiO₂.

5. The negative electrode active material for a secondary battery according to claim 4,
wherein the silicate phase has, in a diffraction pattern obtained by X-ray diffractometry using Cu-Kα radiation,
a peak derived from lithium silicate near at least one selected from the group consisting of 2θ = 19.0°, 2Θ = 23.7°, 2Θ = 24.5°, and 2θ = 24.8°, and
a peak derived from silicon oxide near at least one selected from the group consisting of 2θ = 20.4°, 2θ = 26.0°, and 2θ = 49.2°.

6. The negative electrode active material for a secondary battery according to any one of claims 1 to 5,
wherein the silicate phase further includes an element M, and
the element M is at least one selected from the group consisting of Na, K, Ca, Mg, Zr, Fe, B, Al, P, and La.

7. A secondary battery comprising:
a positive electrode; a negative electrode; an electrolyte; and a separator interposed between the positive electrode and the negative electrode,
wherein the negative electrode includes a current collector and a negative electrode active material layer, and
the negative electrode active material layer includes the negative electrode active material for a secondary battery according to any one of claims 1 to 6.
